Europäisches Patentamt

European Patent Office

Office européen des brevets

(19)

(11) Veröffentlichungsnummer: **0 071 767**
**B1**

(12) # EUROPÄISCHE PATENTSCHRIFT

(45) Veröffentlichungstag der Patentschrift:
**25.09.85**

(21) Anmeldenummer: **82106063.9**

(22) Anmeldetag: **07.07.82**

(51) Int. Cl.⁴: **C 02 F 3/02, C 02 F 1/74**

(54) **Verfahren und Vorrichtung zum Begasen von Flüssigkeiten.**

(30) Priorität: **01.08.81 DE 3130597**

(43) Veröffentlichungstag der Anmeldung:
**16.02.83 Patentblatt 83/7**

(45) Bekanntmachung des Hinweises auf die Patenterteilung:
**25.09.85 Patentblatt 85/39**

(84) Benannte Vertragsstaaten:
**AT BE CH FR IT LI LU NL SE**

(56) Entgegenhaltungen:
**AT - B - 327 830**
**DE - A - 2 841 011**

(73) Patentinhaber: **KLÖCKNER-WERKE AKTIENGESELLSCHAFT, Klöcknerstrasse 29, D-4100 Duisburg 1 (DE)**

(72) Erfinder: **Der Erfinder hat auf seine Nennung verzichtet**

(74) Vertreter: **Kiefer, Winfried, Dipl.-Phys., Klöckner-Werke Aktiengesellschaft Patentabteilung Klöcknerstrasse 29, D-4100 Duisburg 1 (DE)**

ACTORUM AG

## Beschreibung

Die Erfindung betrifft ein Verfahren zum Begasen von Flüssigkeiten, insbesondere für die biologische Aufbereitung von Abwasser, wobei eine schlaufenförmige Strömung erzeugt und Gas bzw. Luft in die Flüssigkeit eingetragen wird, sowie Vorrichtungen zur Durchführung des Verfahrens.

Das Begasen von Flüssigkeiten befasst sich stets mit den gleichen Problemen: das Gas, beispielsweise Luft, soll möglichst homogen und in hoher Konzentration in der Flüssigkeit, allgemein in dem flüssigen Medium, gelöst werden. Dies wird durch Eintragen des Gases in Form von feinen Bläschen in das flüssige Medium und durch intensive Mischung des flüssigen Mediums mit den Bläschen erreicht. Entscheidend für den in der Flüssigkeit gelösten Anteil der eingebrachten Gas- bzw. Luftmenge sind hierbei die Grösse der Gas- bzw. Luftblasen, die Verweilzeit des Gases bzw. der Luft in der Flüssigkeit und die Mikroturbulenz in der Flüssigkeit, sowie der hydrostatische Druck in der Flüssigkeit. Es ergeben sich hierbei eine Fülle von Schwierigkeiten, die bisher noch nicht zufriedenstellend gelöst werden konnten.

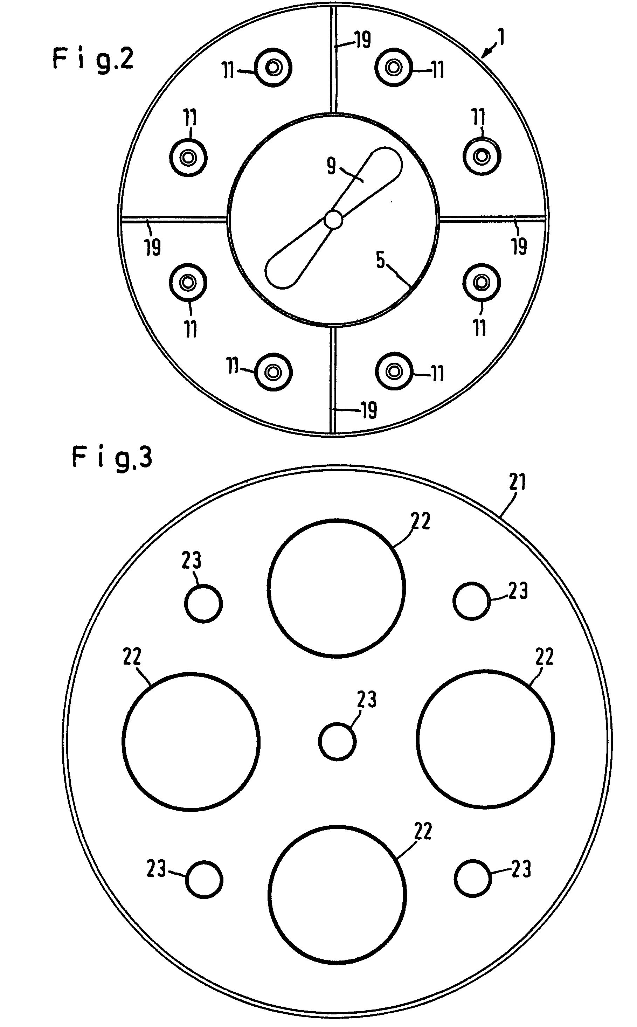

Verfahren der eingangs beschriebenen Art sind an sich bereits bekannt (Umwelt und Technik, 1979, S. 9, Fig. 2). hierbei ist in einem zylindrischen, geschlossenen Behälter beabstandet zu seiner Innenwandung ein Schlaufenstromführungsrohr angeordnet, das im wesentlichen ein beidseitig offenes Rohr ist. Hierbei ist die Anordnung so getroffen, dass die Oberkante des Schlaufenstromführungsrohres unterhalb des Flüssigkeitsspiegels verbleibt, während seine untere Kante oberhalb des Behälterbodens angeordnet ist. Das Schlaufenstromführungsrohr weist in seinem Inneren in etwa mittleren Höhe ein Stromrad auf. Das Stromrad bewirkt durch seine Rotation eine schlaufenförmige, im Schlaufenstromführungsrohr aufwärts und in dem von ihm und der Behälterwand begrenzten Zwischenraum abwärts gerichtete schlaufenförmige Strömung. Der Luftbzw. Gaseintrag erfolgt im Bereich des Stromrades. Nachteilig ist insbesondere, dass die Luft entsprechend dem an der Eintragungsstelle herrschenden hydrostatischen Druck hoch zu verdichten ist. Weiterhin ist die Wegstrecke der Luft- bzw. Gasbläschen bis zur unteren Kante des Schlaufenstromführungsrohrs sehr kurz, wodurch die Verweilzeit der Luftbzw. Gasbläschen sehr klein ist. Die Luftbläschen unterliegen einerseits einer Auftriebskraft, zum anderen unterliegen sie einer abwärts gerichteten, durch die Flüssigkeitsreibung ausgelösten Abwärtsbewegung. Hierdurch ergibt sich eine mittlere Transportgeschwindigkeit der Luftbläschen in Abwärtsrichtung, wobei gleichzeitig die Lösungstendenz infolge des wachsenden hydrostatischen Drucks zunimmt. Im Bereich der unteren Kante des Schlaufenstromführungsrohres wird jedoch die Strömungsrichtung der Flüssigkeit vertikal nach oben gerichtet, so dass sich zusätzlich zu der aus der Auftriebskraft resultierenden Geschwindigkeit noch eine von der Transportgeschwindigkeit des strömenden Mediums herrührende Geschwindigkeitskomponente überlagert, so dass hierdurch die Verweilzeit in dem Zwischenraum zwischen dem Schlaufenstromführungsrohr und der Innenwand des Behälters sehr klein wird. Zusätzlich nimmt die Rückbildung der Bläschen mit geringer werdendem Abstand vom Flüssigkeitsspiegel wieder zu.

Es sind weiterhin Bio-Hochreaktoren bekannt, bei denen unterhalb des Schlaufenstromführungsrohres auf dem Behälterboden kranzartig Luftaustrittsdüsen angeordnet sind. Die Luft muss entsprechend hoch verdichtet werden, damit sie überhaupt in das flüssige Medium eingetragen werden kann. Die Anordnung dieser Düsen auf dem Behälterboden ermöglicht einen maximal grossen Abstand vom Flüssigkeitsspiegel und damit eine entsprechend den Bedingungen grosse Verweilzeit der Gasblasen in dem flüssigen Medium. Die Gasblasen unterliegen jedoch beim Austreten aus den Lufteintragungsdüsen sofort einer Auftriebskraft, wobei mit abnehmendem Abstand vom Flüssigkeitsspiegel die Lösungstendenz geringer wird.

Diese probleme beim Begasen von Flüssigkeiten treten ganz allgemeinen bei Kläranlagen auf und sind ebenfalls noch zufriedenstellend gelöst. So ist es bekannt (Informationsblatt 302 der Fa. Hürner, So klärt man in Leer: Energie- und bodensparend in 81 m Tiefe) in das Erdreich einen sogenannten Tiefschacht von 80 m zu treiben und in ihm unter Ausbildung eines Ringraumes und zu seinem Boden beabstandet ein Schlaufenstromführungsrohr anzuordnen, wobei über ein Leitungssystem unter hohem Druck stehendes Gas bzw. Luft in den unteren Bereich des zwischen der Schachtwand und dem Schlaufenstromführungsrohr gebildeten Zwischenraum in Form von feinen Luftbläschen abgegeben wird. Zwar wird durch den beachtlichen Druck an der Eintragungsstelle die Löslichkeit des Sauerstoffs heraufgesetzt, der Energieaufwand zum Verdichten der Luft ist jedoch beachtlich.

Es ist weiterhin bekannt (DE-A-2 423 085) unterhalb eines Beruhigungsbeckens zwei im Erdreich angeordnete Röhren im Bereich ihrer unteren Enden U-förmig miteinander zu verbinden. Die Erzeugung einer schlaufenförmigen Strömung erfolgt in der Weise, dass etwa oberhalb der Mitte des einen Rohres Luft in Abwärtsrichtung eingepresst wird, wodurch einerseits der Flüssigkeitsumlauf und andererseits die Eintragung der Luft erfolgt. Die Einspeisstelle für die Luft befindet sich ebenfalls in beachtlicher Tiefe unterhalb des Beckenbodens. Die Wirtschaftlichkeit ist sehr gering, da einerseits Luft in beachtlichen Mengen eingespeist werden muss, um einerseits eine ausreichende Lösung von Luftsauerstoff zu bewirken, zum anderen sind beachtliche Mengen an Luft erforderlich, um die schlaufenförmige Strömung zu erzielen.

Es sind weiterhin Bioreaktoren bekannt (DE-C-1 230 398), die einen Behälter mit darin angeordneten sogenannten Bremsplatten aufweisen. Die einen aufgehenden Kanten sind mit der Behälterwand und die anderen jeweils in etwa mit der Mitte der angrenzenden Bremsplatte verbunden, so dass ein im Querschnitt polygonzugartiger Schacht gebildet ist. Die Oberkante dieses Schachtes befindet sich unterhalb des Flüssigkeitsspiegels, während zwischen seiner Unterkante und dem Behälterboden ein rotierender Belüftungsflügel angeordnet ist. Die Bremsplatten sind erforderlich, um eine Rotation der im Behälter befindlichen Abwassermengen zu verhindern. Nachteilig ist hierbei insbesondere der hohe Strömungswiderstand dieser Bremsplatten. Da weiterhin der Strom zwischen dem Schlaufenstromführungsrohr und der Behälterwandung in Zonen unterteilt ist, ergibt sich ein weiterer Nachteil dadurch, dass beim Eintragen der Luft mittels des rotierenden Belüfterflügels diese Zonen nacheinander beaufschlagt werden, und dass ein Flüssigkeitsaustausch zwischen den einzelnen Zonen nicht möglich ist. Auch in diesem Fall ist die einzubringende Luft entsprechend vorzuverdichten, wobei die Verweilzeit der Gasblasen ebenfalls nicht optimal ist, da sie nach dem Austreten aus dem Rührflügel unmittelbar dem Auftrieb unterliegen.

Es ist auch bekannt, die Lufteintragung so durchzuführen (DE-C-2 012 917), dass die zu begasende Flüssigkeit aus einem ersten Behälter in einem zweiten strömt, die beide in unterschiedlicher Höhe angeordnet sind. Ein Teil der Flüssigkeit wird mittels eines Flüssigkeitshebers in den tiefer gelegenen Behälter gefördert. Der in den tieferen Behälter ragende Schenkel des Flüssigkeitshebers hat in seiner Wandung Lufteinlassöffnungen, über die durch die ihn durchströmende Flüssigkeit Luft angesaugt wird. Der Nachteil liegt hier insbesondere darin, dass für beide Becken ein grosser Platzbedarf erforderlich ist und die Verweilzeit des Gases in der Flüssigkeit ebenfalls sehr kurz ist.

Es sind weiterhin Oxidationsgräben für Kommunalabwasser bekannt (Prospekt BV-JZ Tauchstrahl-Belüftungsverfahren, Fa. Vogelbusch, BV-78 21a). Ein Teil des im Oxidationsgraben befindlichen Abwassers wird in ein Rohr gepumpt, dessen unteres offenes Ende oberhalb des Abwasserspiegels angeordnet ist. In dem Rohr wird nach dem Prinzip der Venturi-Düse Aussenluft angesaugt. Das mit Luft vermischte Abwasser fällt im Strahl aus dem Rohr, durchschlägt den Abwasserspiegel geschossartig und verwirbelt mit Wasser im Bereich der Auftreffstelle. Da der Wasserstrahl bis zum Beckenboden nach Möglichkeit durchschlagen soll, muss das Wasser auf eine vorgegebene Mindesthöhe oberhalb des Oxidationsgrabens hochgepumpt werden. Besonders nachteilig ist, dass nur ein Bruchteil der kinetischen Energie des Abwasserspiegels in Energie für diese lokalen Wirbel umgesetzt werden kann. Aufgrund der relativ hohen Geschwindigkeit ist die Verweilzeit der eingebrachten Luft sehr kurz.

Es sind weiterhin Vorrichtungen zum biologischen Reinigen von Abwasser bekannt (US-A-3 439 807). Hierbei ist einem Klärbecken ein Schlaufenstromführungsrohr angeordnet, das mit einem konzentrisch angeordneten weiteren Rohr einen ringförmigen Schacht bildet. In dem Schlaufenstromführungsrohr wird eine aufwärts gerichtete Strömung des Abwassers erzeugt, das über eine Führung horizontal umgeleitet und in dem ringförmigen Schacht abwärts strömt. In dem Bereich der horizontalen Strömung findet die Eintragung von Luft in Form von Bläschen statt.

Der Erfindung liegt die Aufgabe zugrunde, Verfahren zum Begasen von Flüssigkeiten, insbesondere für die biologische Aufbereitung von Abwasser, wobei eine schlaufenförmige Strömung erzeugt und Luft bzw. Sauerstoff in die Flüssigkeit eingetragen wird, derart auszubilden, dass die Verweilzeit der Luft- bzw. Gasbläschen möglicht gross ist und die Luft- bzw. Sauerstoffeintragung im wesentlichen unter Atmosphärendruck erfolgt.

Unter biologischer Aufbereitung ist im Sinne der Erfindung die übliche biologische Aufbereitung von industriellen sowie von Haushalten herrührenden Abwässern zu verstehen, insbesondere die Aufbereitung von speziellen Abwässern, wie sie beispielsweise in Molkereien und Milchindustriebetrieben anfallen. Die letztgenannten Abwässer sind hinsichtlich ihrer organischen in Lösung befindlichen abzubauenden Stoffe biologisch zwar gut abbaubar, sie führen jedoch zu erheblichen Betriebsstörungen in städtischen Kläranlagen, da ihre Zusammensetzung sowie die biologische Belastung nicht mit derjenigen vergleichbar ist, die durch die erstgenannten Abwässer hervorgerufen werden. Insoweit besteht bezüglich derartiger Abwässer die Aufgabe, sie einer derartigen biologischen Aufbereitung zu unterziehen, dass sie den anderen Abwässern der kommunalen Kläranlagen zur endgültigen Aufbereitung zugeführt werden können, ohne dass es zu den genannten Belastungen bzw. Störungen kommt.

Das Begasen von Flüssigkeiten tritt ganz allgemein auch bei der Belüftung von Flussläufen, den Verhefungsprozessen im Brauereigewerbe usw. auf, so dass sich die Erfindung auch auf diese technischen Bereiche bezieht.

Die erfindungsgemässe Lösung besteht darin, dass die schlaufenförmige Strömung in der in einem Behälter bzw. Becken verweilenden Flüssigkeit erzeugt wird, mindestens ein Teilstrom von der schlaufenförmig strömenden Flüssigkeit abgezweigt, im Bereich des Flüssigkeitsspiegels in den Teilstrom Gas eingetragen und der angereicherte Teilstrom im Bereich des Behälter- bzw. Beckenbodens der schlaufenförmig strömenden Flüssigkeit beigemischt wird. Indem erfindungsgemäss ein Teilstrom abgezweigt und diesem im Bereich des Flüssigkeitsspiegels Luft bzw. Sauerstoff feinblasig eingetragen wird, werden die Betriebskosten eintscheidend herabgesetzt. Durch die erfindungsgemässe Beimischung des mit Luft angereicherten Teilstroms im Bereich des Behälter- bzw. Beckenbodens ergibt sich eine relativ lange Verweilzeit der Luft- bzw. Sauerstoffbläschen in dem Teilstrom.

In einer weiteren Ausgestaltung der Erfindung wird die schlaufenförmige Strömung im wesentlichen vertikal geführt. Diese Führung wird insbesondere bei Hochreaktoren vorgenommen, wobei die Abzweigung des Teilstroms vorzugsweise im Bereich des Behälterbodens erfolgt, wohin auch der angereicherte Teilstrom zurückströmt und mit dem Schlaufenstrom sich vermischt. Abgesehen von einer langen Verweilzeit wird die Lösungstendenz der Luftbläschen noch dadurch gefördert, dass mit steigender Entfernung von dem Flüssigkeitsspiegel ihre Lösungstendenz grösser wird.

In einer vorteilhaften Abwandlung hiervon wird die schlaufenförmige Strömung im wesentlichen horizontal geführt. Eine derartige Strömung wird vorzugsweise in Oxidationsgräben bzw. Klärbechen erzeugt, die in sich geschlossen sind.

In einer vorteilhaften Weiterführung der Erfindung ist der Teilstrom schlaufenförmig und ebenfalls im wesentlichen vertikal geführt, wodurch die Verweilzeit der Luft bzw. des Sauerstoffs verlängert wird. Diese Führung erfolgt bei Hochreaktoren, Gräben und Becken.

In einer noch weiteren vorteilhaften Ausgestaltung der Erfindung wird der Teilstrom mehrfach schlaufenförmig geführt, so dass die Verweilzeit noch weiter gesteigert werden kann.

Diese erfindungsgemässen Verfahren werden für die biologische Aufbereitung von Abwasser eingesetzt, indem in einem Behälter, Bioreaktor und dgl. mittels eines Schlaufenstromführungsrohres eine schlaufenförmige Strömung erzeugt und mindestens ein Teilstrom des Abwassers mit Luft beaufschlagt und beigemischt wird. Erfindungswesentlich ist, dass in den Teilstrom des Abwassers im Bereich des Abwasserspiegels die Luft eingetragen und der mit Luft angereicherte Teilstrom im unteren Bereich des Behälters bzw. des Bioreaktors dem schlaufenförmig strömenden Abwasser zugegeben wird.

Diese erfindungsgemässen Verfahren kommen auch dann zum Einsatz, wenn die biologische Aufbereitung von Abwasser in einem Becken bzw. Oxidationsgraben erfolgt, wobei es insbesondere vorteilhaft ist, dass das Becken bzw. der Graben in sich geschlossen sind, d.h., zum Beispiel die Form eines Ringes o. dgl. haben. Erfindungsgemäss wird in dem Becken bzw. Oxidationsgraben eine umlaufende Strömung erzeugt und mindestens ein Teilstrom des Abwassers abgezweigt, mit Luft beaufschlagt und beigemischt, wobei in den Teilstrom des Abwassers im Bereich des Abwasserspiegels die Luft eingetragen und der mit Luft angereicherte Teilstrom im unteren Bereich des Beckens bzw. Oxidationsgrabens dem in ihm umlaufenden Abwasser (schlaufenförmiger Umlaufstrom) beigemischt wird.

Erfindungsgemäss kann in einem Reaktor die Beimischung in dem Innenraum des Schlaufenstromführungsrohres bzw. in dem Zwischenraum zwischen diesem und der Reaktorinnenwand erfolgen. Von der ersten Alternative wird dann Gebrauch gemacht, falls im Schlaufenstromführungsrohr die Strömung abwärts gerichtet ist, damit eine möglichst lange Verweilzeit erzielt wird. Erfindungsgemäss erfolgt dann die Zuführung und Beimischung im Gegenstromprinzip. In einem Becken bzw. Oxidationsgraben erfolgt die Beimischung erfindungsgemäss nach dem Querstrom- bzw. Kreuzstromprinzip.

In einer noch weiteren Ausgestaltung der Erfindung ist in einem Behälter bzw. Bioreaktor ein Schlaufenstromführungsrohr angeordnet, das in seinem oberen Bereich ein Stromrad axialer Bauart aufweist sowie mindestens ein in den Zwischenraum zwischen dem Schlaufenstromführungsrohr und der Behälterinnenwand eintauchendes, unten offenes und von dem Teilstrom durchflossenes Lufteintragungsrohr angeordnet, das an seinem oberen Ende eine Einrichtung zum feinblasigen Eintragen von Luft aufweist und bis in den Bereich des Behälterbodens ragt. Hierdurch ergibt sich eine besonders platzsparende Ausführung für Bioreaktoren.

Bei einem Becken bzw. Oxidationsgraben ist in vorteilhafter Ausgestaltung der Erfindung dieses bzw. dieser in sich geschlossen und weist mindestens einen Zirkulator zur Erzeugung einer umlaufenden Strömung auf, wobei mindestens ein in den Oxidationsgraben eintauchendes, unten offenes und von einem Teilstrom durchflossenes Lufteintragungsrohr vorgesehen ist, das bis in den Bereich des Beckenbodens ragt und das im Bereich des Abwasserspiegels eine Einrichtung zum Eintragen von Luft aufweist.

In vorteilhafter Weiterbildung ist erfindungsgemäss die Einrichtung zum feinblasigen Eintragen von Luft ein im Lufteintragungsrohr angeordneter poröser Einsatz, wodurch sich ein besonders feinblasiger Eintrag der Luft ergibt.

Die Erfindung wird anhand von Ausführungsbeispielen in der Zeichnung erläutert. Es zeigen:

Fig. 1 das Ausführungsbeispiel eines Bioreaktors im Schnitt;

Fig. 2 einen Schnitt gemäss der Linie A-A;

Fig. 3 ein weiteres Ausführungsbeispiel eines Bioreaktors im schematischen Querschnitt;

Fig. 4, 5 ein Ausführungsbeispiel für einen Oxidationsgraben.

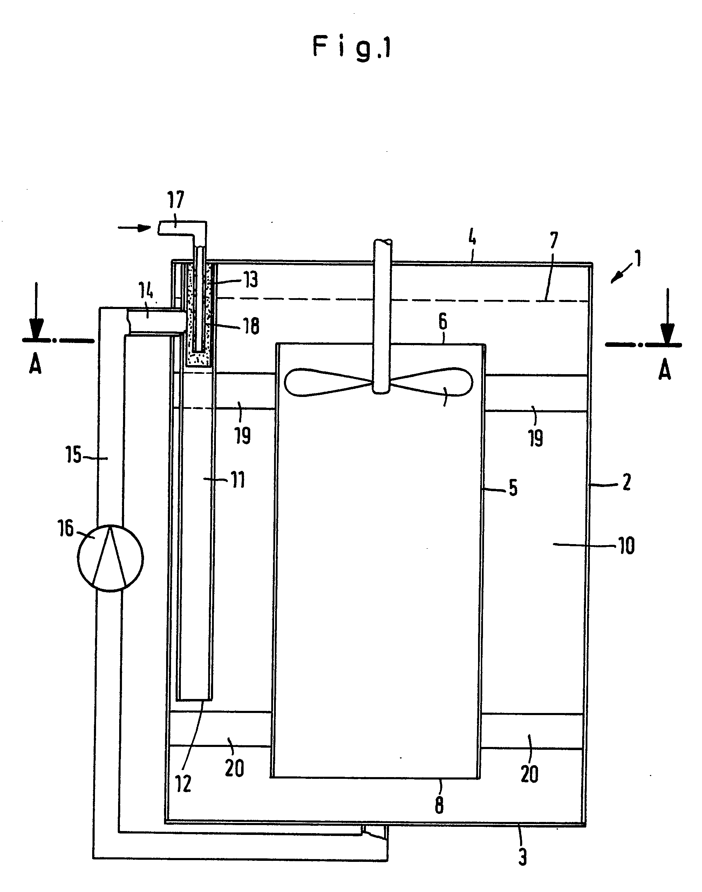

Gemäss Fig. 1 ist in einem hohlzylinderförmigen Bioreaktor 1 mit der Wandung 2, dem Boden 3 und dem Deckel 4 konzentrisch als Schlaufenstromführungsrohr ein Hohlzylinder 5 angeordnet. Seine obere Kante 6 befindet sich stets unterhalb des Flüssigkeitsspiegels 7 des Abwassers und seine untere Kante 8 stets oberhalb des Reaktorbodens 3.

In dem Schlaufenstromführungsrohr 5 ist unterhalb der oberen Kante 6 ein Stromrad axialer Bauart 9 angeordnet. In dem von dem Hohlzylinder und der Wandung begrenzten Zwischenraum 10 sind mehrere Lufteintragungsrohre 11 angeordnet, von denen der Übersichtlichkeit halber nur eines dargestellt ist. Das Lufteintragungsrohr ist durch den Deckel 4 des Reaktors geführt und in ihm feststehend angeordnet, während sein unten offenes Ende 12 oberhalb der unteren Kante des Schlaufenstromführungsrohres 5 endet. In dem oberen Bereich des Lufteintragungsrohres 11 ist ein poröser Einsatz 13 eingesetzt. Das Lufteintragungsrohr weist einen Anschluss 14 auf, der über eine Leitung 15, in der eine Pumpe 16 angeordnet ist, mit dem Boden des Reaktors verbunden ist. Der Innenraum des Schlaufenstromführungsrohres, der Zwischenraum 10, das Lufteintragungsrohr 11 stehen demnach nach dem Prinzip der kommunizierenden Röhren miteinander in Verbindung. In dem porösen Einsatz 13 ist ein Rohr 17 für die Zufuhr von Luft angeordnet, die über die Bohrungen 18 des Rohres in den porösen Einsatz gedrückt wird. Durch Vorgabe der Umdrehungszahl des Stromrades 9 wird die Abwassersäule in dem Schlaufenstromführungsrohr 9 nach unten gedrückt, so dass die im Zwischenraum befindliche Abwassersäule angehoben wird und das Abwasser aus dem Zwischenraum über die als Überlauf dienende Kante 6 in das Schlaufenstromführungsrohr strömt. Durch Vorgabe der Pumpenleistung wird mit vorgegebener Geschwindigkeit ein Teilstrom des in Abwärtsrichtung strömenden Abwassers über die Leitung 15 dem oberen Bereich des Lufteintragungsrohres zugeführt, das in den von dem porösen Einsatz und der Wandung des Lufteintragungsrohres gebildeten Zwischenraum eintritt. Durch die entsprechende Bemessung des Abstandes zwischen porösem Einsatz und Innenwandung des Lufteintragungsrohres wird in diesem Bereich die Strömung turbulent und reisst die auf der Aussenseite des Einsatzes sich bildenden Luft- bzw. Gasbläschen mit. Durch die entsprechende Vorgabe der Strömungsgeschwindigkeit in Abwärtsrichtung wird erreicht, dass die Luftbläschen langsam abwärts transportiert werden, wobei sie infolge des zunehmenden Drucks um so leichter in Lösung gehen, je weiter sie sich von dem Flüssigkeitsspiegel entfernen. Durch die in dem Lufteintragungsrohr herrschende Turbulenz erfolgt gleichzeitig eine gute Durchwirbelung. Es wird somit einerseits eine sehr grosse Verweilzeit der Luftbläschen in dem Luftzuführungsrohr und andererseits eine sehr gute örtliche Turbulenz erreicht. Aus dem unteren Ende der Luftzuführungsrohre tritt jeweils ein mit Luft angereicherter Flüssigkeitsstrom aus, der sich mit der aufwärts gerichteten Strömung durchmischt, wobei ebenfalls durch die entsprechende Vorgabe der Geschwindigkeit der aufwärts gerichteten Strömung eine Turbulenz erzeugt wird, so dass bereits im unteren Bereich dieses Zwischenraums eine sehr gute, im Idealfall vollständige homogene Durchmischung des aufwärts strömenden Abwassers mit den angereicherten Teilströmen erfolgt. Dadurch, dass erfindungsgemäss praktisch nur eine Luftverdichtung zu erfolgen hat, um das Gas von der Innenseite des porösen Einsatzes auf die Aussenseite zu transportieren, ergibt sich schon ein wesentlicher Ersparnisfaktor bezüglich der aufzuwendenden Energie zum Betreiben des erfindungsgemässen Reaktors. Weiterhin ist es möglich, je nach der Art des aufzubereitenden Abwassers einen Teil dieser Luftzuführungsrohre stillzulegen, so dass je nach dem Angebot des aufzuarbeitenden Abwassers der erfindungsgemässe Reaktor optimal gefahren werden kann.

Im Bereich der oberen und unteren Kante des Schlaufenstromführungsrohres sind Stützbleche 19 bzw. 20 vorgesehen, die einerseits den Schacht mit der Innenwand des Behälters verbinden, andererseits zur Wirbelbildung dienen. Wie aus Fig. 1 ersichtlich, ist der mittlere Bereich des Zwischenraumes frei von Stützblechen.

Fig. 3 zeigt ein weiteres Ausführungsbeispiel eines Bioreaktors im schematischen Querschnitt. Die Behälterwand ist mit 21 bezeichnet. Im Reaktor sind mehrere Schlaufenstromführungsrohre 22 mit jeweils einem nicht dargestellten Stromrad axialer Bauart angeordnet. Hierdurch ist es möglich, Reaktoren mit grossen Innendurchmessern zu bauen, ohne dass jeweils ein Stromrad mit extremen Abmessungen anzufertigen ist. Die Kreise 23 deuten die Anordnung der Lufteintragungsrohre an. Die gesamte Anordnung ist symmetrisch, so dass strömungstechnisch überall die gleichen Verhältnisse herrschen.

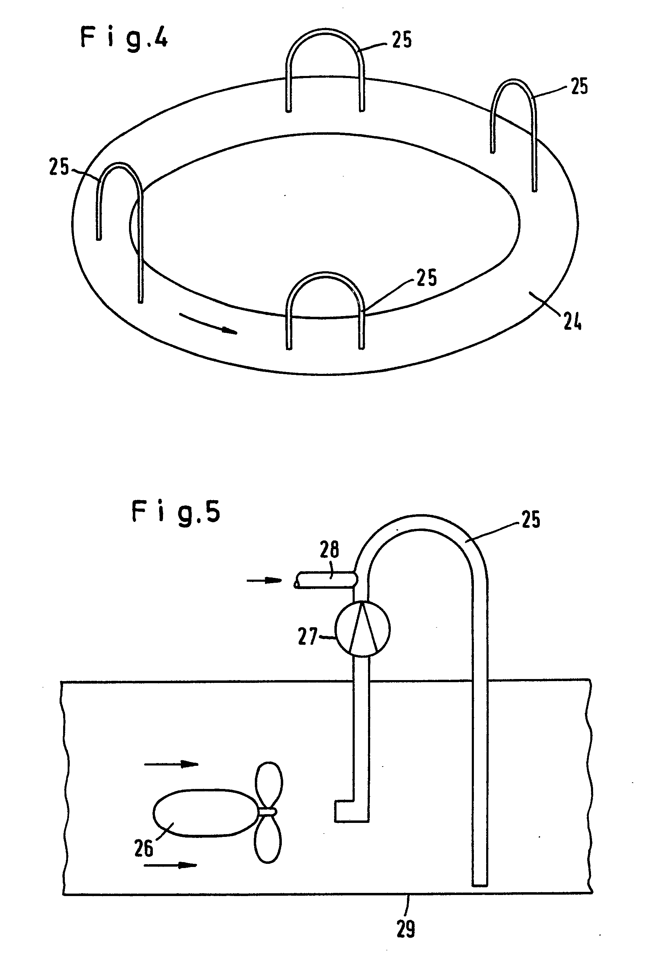

Fig. 4 zeigt in perspektivischer Ansicht schematisch einen in sich geschlossenen Oxidationsgraben 24 mit mehreren Lufteintragungsrohren 25. Der Pfeil gibt die Strömungsrichtung im Oxidationsgraben an.

Die Fig. 5 ist ein Schnitt in Strömungsrichtung durch ein Lufteintragungsrohr. In dem in sich geschlossenen Oxidationsgraben ist mindestens ein Zirkulator 26 angeordnet, der eine umlaufende Strömung bewirkt. In jedem Lufteintragungsrohr 25 ist eine Pumpe 27 angeordnet, die Abwasser ansaugt. Wie aus den Fig. 4 und 5 ersichtlich, ist das Lufteintragungsrohr U-förmig ausgebildet. Vor dem Scheitel des Lufteintragungsrohres befindet sich eine Einrichtung 28 für die Lufteintragung, die im einfachsten Fall eine mit Druckluft beaufschlagte Düse ist. Der mit Luft angereicherte Teilstrom tritt im Bereich der Sohle 29 des Oxidationsgrabens aus. Das Rohr ist bis maximal unterhalb der Abreisshöhe des Teilstroms geführt. Dies gilt auch für die oben erläuterten Bioreaktoren, wobei durch entsprechenden Systemdruck die Abreisshöhe grösser ist als bei dem Atmosphärendruck des Oxidationsgrabens.

Ganz allgemein kann das Eintragen der Luft durch stationäre oder mobile Einrichtungen erfolgen und zwar unter atmosphärischem wie auch höherem oder niedrigerem Systemdruck.

Die Gas- bzw. Luftzufuhr erfolgt hierbei innerhalb eines oder mehrerer durch vertikale Rohrschlaufen geführte Kreisläufe des Becken- bzw. Behälterinhalts. Hierbei kann subatmosphärischer Druck bzw. atmosphärischer bzw. überatmosphärischer Druck erzeugt werden. Die feinblasige Lufteintragung erfolgt jeweils in die bzw. in die erste der abwärts gerichteten Stromsäulen hinter den den Kreislauf bewirkenden Einrichtungsteilen und zwar unmittelbar hinter deren höchstem Punkt bzw. in Höhe bzw. kurz unterhalb des Flüssigkeitsspiegels bzw. oberhalb des Flüssigkeitsspiegels und zwar jeweils in die bzw. in die erste der aufwärts gerichteten Stromsäulen hinter den den Kreislauf bewirkenden Einrichtungsteilen.

Die Lufteintragung erfolgt gesteuert nach nicht überschreitbaren Grenzzuständen, wie z.B. dem maximalen Gasgehalt im Kreislauf, bei dessen Überschreitung die Aufrechterhaltung der feinblasigen Verteilung des zugeführten Gases nicht mehr sichergestellt ist (Koaleszenz).

Der Kreislauf wird allgemein bewirkt durch Pumpen, wie z.B. durch axial bzw. halbaxial durchströmte Pumpen, durch Kreiselpumpen sowie mit einer Pumpe für jeweils einen Kreislauf bzw. mit einer Pumpe für mehrere Kreisläufe.

Der Eintritt der Flüssigkeit in den oder in die Kreisläufe erfolgt in Bereichen des Beckens bzw. Reaktors, in denen der Flüssigkeitsinhalt gasblasenarm bzw. gasblasenfrei ist, d.h. im Bereich der Becken- bzw. Behältersohle oder im zentralen Bereich. Der Austritt aus dem oder den Kreisläufen bzw. der Wiedereintritt in das Becken bzw. den Behälter erfolgt in Bereichen des Beckens bzw. Reaktors, in denen aus verfahrenstechnischer oder hydrodynamischer Sicht eine Anreicherung an Gasblasen und gelöstem Gas erfolgen soll, so z.B. im Bereich der Becken- bzw. Reaktorsohle oder im peripheren Bereich.

Die den einzelnen Kreislauf führenden vertikalen Rohrschlaufen können haarnadelförmig, als Einfach-Schlaufen oder als Mehrfach-Schlaufen ausgebildet sein. Die den einzelnen Kreislauf führenden vertikalen Rohrschlaufen verlaufen innerhalb des Beckens bzw. Reaktors oder auch teilweise oder gänzlich ausserhalb des Beckens oder des Reaktors in der Art, dass die Rohrschlaufen über den Flüssigkeitsspiegel im Becken bzw. Behälter hinausreichen, wobei die Höhe begrenzt ist durch das Abreissen der Flüssigkeitssäule.

Der Querschnitt der den Kreislauf führenden vertikalen Rohrschlaufen kann in der oder den auf- und abwärts gerichteten Stromsäulen der gleiche sein. Er kann auch unterschiedlich sein und zwar in der oder den aufwärts gerichteten Stromsäulen grösser als in den abwärts gerichteten Stromsäulen.

Ganz allgemein wird die Umlaufströmung erzeugt durch ein einzelnes oder mehrere parallel oder in Reihe angeordnete Stromräder axialer Bauart, wobei der Querschnitt bzw. deren Gesamtquerschnitt im Fall des Parallelbetriebs mindestens 20% des Strömungsquerschnitts im Becken bzw. Behälter ausmacht und der durch das einzelne Stromrad erzeugte Flüssigkeitsstrahl eine höchstens viermal höhere Geschwindigkeit hat als die mittlere Geschwindigkeit der Umlaufströmung im Becken bzw. Reaktor.

Hierbei entspricht der durch ein oder mehrere Axialräder bewirkte Umlaufstrom im Becken bzw. Behälter einem stündlichen Massenumschlag von mindestens dem achtfachen des Becken- bzw. Behälterinhalts, wobei er im Vergleich mit dem oder den Begasungskreisläufen einem mindestens sechsfach höheren stündlichen Massenumschlag entspricht.

Die turbulente Umlaufströmung kann erfolgen in einem stehenden Reaktor mit freiem Flüssigkeitsspiegel mit ganz oder teilweise (überwiegend) zylindrischer Bauart. Er kann bestehen aus zwei kommunizierenden, oben und unten miteinander verbundenen Hohlkörpern, wobei darin die Umlaufströmung geführt wird und zwar in Form einer koaxialen, in sich geschlossenen Schlaufe oder in Form einer ebenen (nicht koaxialen) in sich geschlossenen Schlaufe.

Die turbulente Umlaufströmung kann prinzipiell geführt werden in einem Becken mit freiem Flüssigkeitsspiegel, mit gerade verlaufenden, bevorzugt vertikalen seitlichen Begrenzungsflächen, wobei vertikale Trennwände in Form einer ebenen, einfachen oder mehrfachen, in sich geschlossenen Schlaufe vorgesehen sein können.

## Patentansprüche

1. Verfahren zum Begasen von Flüssigkeiten, wobei eine schlaufenförmige Strömung erzeugt und das Gas in die Flüssigkeit eingetragen wird, dadurch gekennzeichnet, dass die schlaufenförmige Strömung in der in einem Behälter (Becken) verweilenden Flüssigkeit erzeugt wird, mindestens ein Teilstrom von der schlaufenförmig strömenden Flüssigkeit abgezweigt, in der Nähe des Flüssigkeitsspiegels in den Teilstrom Gas eingetragen und der angereicherte Teilstrom im Bereich des Behälter-(Becken)-bodens der schlaufenförmig strömenden Flüssigkeit beigemischt wird.

2. Verfahren nach Anspruch 1, dadurch gekennzeichnet, dass die schlaufenförmige Strömung im wesentlichen vertikal geführt wird.

3. Verfahren nach Anspruch 1, dadurch gekennzeichnet, dass die schlaufenförmige Strömung im wesentlichen horizontal geführt wird.

4. Verfahren nach einem der Ansprüche 1, 2 oder 3, dadurch gekennzeichnet, dass der abgezweigte Teilstrom schlaufenförmig und im wesentlichen vertikal und bis maximal unterhalb der Abreisshöhe geführt wird.

5. Verfahren nach einem der Ansprüche 1-4, dadurch gekennzeichnet, dass die schlaufenförmige Strömung mehrfach schlaufenförmig geführt wird.

6. Verfahren nach Anspruch 4 oder 5, dadurch gekennzeichnet, dass der abgezweigte Teilstrom mehrfach schlaufenförmig geführt wird.

7. Verfahren nach einem der Ansprüche 4-6 für die biologische Aufbereitung von Abwasser, wobei in einem als Bioreaktor ausgebildeten Behälter mittels mindestens eines Schlaufenstromführungsrohres eine schlaufenförmige Strömung erzeugt wird, dadurch gekennzeichnet, dass mindestens einem Teilstrom des Abwassers Luft beigemischt wird, indem in den Teilstrom des Abwassers im Bereich des Abwasserspiegels die Luft eingetragen und der mit Luft angereicherte Teilstrom im unteren Bereich des Bioreaktors dem schlaufenförmigen Umlaufstrom beigemischt wird.

8. Verfahren nach einem der Ansprüche 1-6 für die biologische Aufbereitung von Abwasser, wobei in einem als Oxidationsgraben ausgebildeten Behälter eine umlaufende Strömung erzeugt wird, dadurch gekennzeichnet, dass mindestens ein Teilstrom des Abwassers mit Luft beaufschlagt und beigemischt wird, indem in dem Teilstrom des Abwassers im Bereich des Abwasserspiegels die Luft eingetragen und der mit Luft angereicherte Teilstrom im unteren Bereich des Oxidationsgrabens dem Umlaufstrom beigemischt wird.

9. Verfahren nach Anspruch 7, dadurch gekennzeichnet, dass die Beimischung in dem von der Innenwandung des Bioreaktors und dem Schlaufenstromführungsrohr begrenzten Zwischenraum erfolgt.

10. Verfahren nach Anspruch 8, dadurch gekennzeichnet, dass die Beimischung nach dem Gegenstromprinzip erfolgt.

11. Verfahren nach Anspruch 8, dadurch gekennzeichnet, dass die Beimischung nach dem Querstrom- bzw. Kreuzstromprinzip erfolgt.

12. Vorrichtung zur Durchführung des Verfahrens nach einem oder mehreren der Ansprüche 1-10 mit einem Behälter, in dem ein Schlaufenstromführungsrohr mit einem Stromrad axialer Bauart angeordnet ist, dadurch gekennzeichnet, dass in dem oberen Bereich des Schlaufenstromführungsrohres (5) das Stromrad axialer Bauart (9) angeordnet ist und dass in den Zwischenraum (10) zwischen dem Schlaufenstromführungsrohr und der Behälterinnenwand mindestens ein, unten offenes und von einem Teilstrom durchflossenes Lufteintragungsrohr (11), bis in den Bereich des Behälter-(Becken)-bodens eintaucht, das im Bereich des Abwasserspiegels eine Einrichtung (13) zum Eintragen von Luft aufweist.

13. Vorrichtung zur Durchführung des Verfahrens nach einem oder mehreren der Ansprüche 1-11, gekennzeichnet, durch einen in sich geschlossenen Oxidationsgraben (24) mit mindestens einem Stromrad axialer Bauart (26) zur Erzeugung einer umlaufenden Strömung und mindestens ein in den Oxidationsgraben eintauchendes, unten offenes und von einem Teilstrom durchflossenes Lufteintragungsrohr (25), das oberhalb des Abwasserspiegels eine Einrichtung (28) zum Eintragen von Luft aufweist.

14. Vorrichtung nach Anspruch 12 oder 13, dadurch gekennzeichnet, dass die Einrichtung zum feinblasigen Eintragen von Luft ein in einem Lufteintragungsrohr angeordneter poröser Einsatz (13) ist.

## Claims

1. A method for the gasification of fluids, wherein a loop-shaped flow is produced and the gas is introduced into the fluid, characterised in that the loop-shaped flow is produced in the fluid contained in a container (tank), in that at least part of the flow of the fluid flowing in a loop-shaped manner is branched off, in that gas is introduced into the partial flow in the vicinity of the fluid surface and in that the enriched partial flow is mixed with the fluid flowing in a loop-shaped manner in the area of the container (tank) base.

2. A method as claimed in claim 1, characterised in that the loop-shaped flow is directed substantially vertically.

3. A method as claimed in claim 1, characterised in that the loop-shaped flow is directed substantially horizontally.

4. A method as claimed in one of claims 1, 2 or 3, characterised in that the partial flow which is branched off is directed in the manner of a loop and substantially vertically and at most up to a point below the level of separation.

5. A metod as claimed in one of claims 1 to 4, characterised in that the loop-shaped flow is directed in the form of multiple loops.

6. A method as claimed in claims 4 or 5, characterised in that the partial flow which is branched off is directed in the form of multiple loops.

7. A method as claimed in one of claims 4 to 6 for the biological treatment of waste water, in which a loop-shaped flow is produced in a container formed as a bioreactor by means of at least one loop flow guide tube, characterised in that air is mixed with at least part of the flow of the waste water, the air being introduced into the partial waste water flow in the area of the waste water surface and the partial flow enriched with air being mixed with the loop-shaped rotary flow in the lower area of the bioreactor.

8. A method as claimed in one of claims 1 to 6 for the biological treatment of waste water, in which a rotary flow is produced in a container formed as an oxidation trench, characterised in that at least part of the flow of the waste water is acted upon and mixed with air, the air being introduced into the partial waste water flow in the area of the waste water surface and the partial flow enriched with air being mixed with the rotary flow in the lower area of the oxidation trench.

9. A metod as claimed in claim 7, characterised in that the mixing takes place in the intermediate space defined by the inner wall of the bioreactor and the loop flow guide tube.

10. A metod as claimed in claim 8, characterised in that the mixing takes place in accordance with the counterflow principle.

11. A method as claimed in claim 8, characterised in that the mixing takes place in accordance with the transverse or crossflow principle.

12. A device for carrying out the method as claimed in one or more of claims 1 to 10 having a container, in which a loop flow guide tube with a flow wheel of axial construction is disposed, characterised in that the flow wheel (9) of axial construction is disposed in the upper area of the loop flow guide tube (5) and in that in the intermediate space (10) between the loop flow guide tube and the inner wall of the container at least one air introduction tube (11), which is open at the bottom and through which a partial flow travels, dips into the area of the container (tank) base, which tube has a device (13) for the introduction of air in the area of the waste water surface.

13. A device for carrying out the method as claimed in one or more of claims 1 to 11, characterised by a closed oxidation trench (24) having at least one flow wheel (26) of axial construction for the production of a rotary flow and at least one air introduction tube (25) dipping into the oxidation trench, open at the bottom and through which a partial flow passes, which tube has a device (28) for the introduction of air abowe the waste water surface.

14. A device as claimed in claim 12 or 13, characterised in that the device for the introduction of air in the form of fine bubbles is a porous insert (13) disposed in an air introduction tube.

## Revendications

1. Procédé pour gazéifier des liquides, dans lequel on provoque un écoulement en boucle et l'on introduit le gaz dans le liquide, caractérisé par le fait que l'on réalise l'écoulement en boucle dans le fluide séjournant dans un récipient (bassin), on dérive un courant partiel du liquide circulant en boucle, l'on introduit du gaz dans le courant partiel à proximité de la surface du liquide et que l'on mélange le courant partiel enrichi au liquide circulant en boucle dans la zone du fond du récipient (bassin).

2. Procédé selon la revendication 1, caractérisé par le fait que l'écoulement en boucle est guidé sensiblement verticalement.

3. Procédé selon la revendication 1, caractérisé par le fait que l'écoulement en boucle est guidé sensiblement horizontalement.

4. Procédé selon l'une des revendications 1, 2 ou 3, caractérisé par le fait que le courant partiel dérivé est guidé en boucle, sensiblement verticalement, et jusqu'à au maximum en-dessous de la hauteur de décollement.

5. Procédé selon l'une des revendications 1 à 4, caractérisé par le fait que l'écoulement en boucle est guidé plusieurs fois en boucle.

6. Procédé selon la revendication 4 ou 5, caractérisé par le fait que le courant partiel dérivé est guidé plusieurs fois en boucle.

7. Procédé selon l'une des revendications 4-6 pour le traitement biologique d'eaux usées dans lequel on réalise dans un récipient constitué en bio-réacteur un écoulement en boucle à l'aide d'au moins un tube de guidage de courant en boucle, caractérisé par le fait que l'on mélange de l'air à au moins un courant partiel d'eaux usées, l'air étant introduit dans le courant partiel d'eaux usées dans la zone de la surface de l'eau et l'on mélange le courant partiel enrichi d'air au courant circulant en boucle dans la zone inférieure du bio-réacteur.

8. Procédé selon l'une des revendications 1-6, pour le traitement biologique d'eaux usées dans lequel on réalise un écoulement tournant dans un récipient sous forme de fosse d'oxydation, caractérisé par le fait que l'on soumet à l'air et on mélange à celui-ci au moins un courant partiel d'eaux usées, l'air étant introduit dans le courant partiel d'eaux usées, dans la zone de la surface de l'eau et l'on mélange le courant partiel enrichi d'air au courant circulant dans la zone inférieure de la fosse d'oxydation.

9. Procédé selon la revendication 7, caractérisé par le fait que le mélange s'effectue dans l'espace délimité entre la paroi intérieure du bio-réacteur et le tube de guidage de courant en boucle.

10. Procédé selon la revendication 8, caractérisé par le fait que le mélange s'effectue selon le principe du contre-courant.

11. Procédé selon la revendication 8, caractérisé par le fait que le mélange s'effectue selon le principe du courant transversal ou du courant en croix.

12. Dispositif pour la mise en oeuvre du procédé selon une ou plusieurs des revendications 1-10, avec un récipient dans lequel est mis en place un tube de guidage de courant en boucle avec une roue d'écoulement de construction axiale, caractérisé par le fait que la roue d'écoulement de construction axiale (9) est disposée dans la zone supérieure du tube de guidage de courant en boucle (5) et que, dans l'espace (10) entre le tube de guidage de courant en boucle et la paroi interne du récipient, un tube d'introduction d'air (11), ouvert vers le bas et parcouru par un courant partiel, plonge jusque dans la zone du fond du récipient (bassin), ledit tube présentant dans la zone de la surface de l'eau un dispositif (13) pour l'introduction d'air.

13. Dispositif pour la mise en oeuvre du procédé selon l'une ou plusieurs des revendications 1-11, caractérisé par une fosse d'oxydation fermé (24) avec au moins une roue d'écoulement de construction axiale (26) pour produire un écoulement circulant, et au moins un tube d'introduction d'air (25) ouvert vers le bas et parcouru par un courant partiel plongeant dans la fosse d'oxydation, ledit tube présentant au-dessus de la surface de l'eau un dispositif (28) pour l'introduction d'air.

14. Dispositif selon la revendication 12 ou 13, caractérisé par le fait que le dispositif pour l'introduction d'air en bulles fines est un embout poreux (13) mis en place dans un tube d'introduction d'air.

0 071 767

# F i g .1

Fig.2

Fig.3

Fig.4

25

25

25

25

24

Fig.5

25

28

27

26

29